# DEMANDE DE BREVET EUROPEEN

(11) **EP 1 055 716 A1**
(43) Date de publication de la demande: **29.11.2000**
(21) Numéro de dépôt: 00401444.5
(22) Date de dépôt: 24.05.2000
(51) Int. Cl.: C09J 175/04, C08G 18/64, C08G 18/69

(54) **Composition collante pour géomembrane bitume/polyuréthane armée**

(30) Priorité: 26.05.1999 FR 9906661
(71) Demandeur: COLAS, 92653 Boulogne-Billancourt Cédex (FR)
(72) Inventeur: Carroget, Jean, 78180 Montigny le Bretonneux (FR); Chappat, Michel, 78310 Maurepas (FR)
(74) Mandataire: Michelet, Alain

(57) **Abrégé**

Composition collante pour géomembrane bitume/polyuréthane armée, caractérisée an ce qu'elle comporte un ou plusieurs composés du type polyuréthane et un ou plusieurs agents durcisseurs correspondants. La composition peut comporter préférentiellement, un filler, un agent réticulant et un silane. La composition se présente sous forme d'un kit à deux composants. La composition est utilisée pour réaliser des joints. Un procédé de mise an oeuvre ainsi qu'un procédé de réalisation de la composition sont revendiqués.

## Description

La présente invention concerne une composition collante pour géomembrane bitume/polyuréthane armée ainsi qu'un procédé de mise en oeuvre et qu'un procédé de réalisation. Elle a des applications en génie civil et plus particulièrement dans les opérations d'étanchéification.

Dans les réalisations de génie civil où l'on cherche à isoler deux milieux l'un de l'autre du point de vue des échanges de fluides, on connaît plusieurs produits et procédés basés sur l'utilisation de films isolants. Par exemple, dans le domaine hydraulique où il faut assurer l'étanchéité des barrages, des bassins, des canaux ou piscines on peut utiliser des films étanches. Dans le domaine de l'environnement où l'on cherche à isoler des masses de matières potentiellement toxiques des terrains avoisinants et de la nappe phréatique on peut aussi utiliser des films étanches. Ainsi les substances toxiques sous forme liquide sont contraintes dans la masse et les eaux de ruissellement ou interstitielles circulantes ne peuvent plus atteindre la masse et entraîner ces substances. Dans d'autres domaines, l'étanchéité des constructions, des canalisations, voire de câbles peut aussi être obtenue par l'utilisation de films. Ces films peuvent être des feuilles de matière plastique ou des films tissés ou non tissés, on les appellera ultérieurement géomembranes.

Les films de matière imperméable à l'eau destinés à assurer l'étanchéité se présentent généralement sous forme de rouleaux de largeur prédéfinie. Les surfaces à étanchéifier étant généralement plus importantes que la largeur des films, ces derniers sont disposés en bandes parallèles légèrement chevauchantes. La continuité du point de vue mécanique et de l'étanchéité entre les bandes de film est assurée par la réalisation d'un joint entre ces bords chevauchants. Ce joint est généralement obtenu par soudage à chaud des deux bords des films. Dans certains cas il est aussi nécessaire d'assurer l'étanchéification et la continuité mécanique non seulement entre deux surfaces d'un même film ou entre plusieurs films, mais aussi entre le film et un support sur lequel il est placé ou d'un support placé sur lui, une construction ou une conduite par exemple. Le terme joint correspond à toute liaison entre deux éléments du même type ou de type différent.

La requérante, dans le document FR-2 730 257, a proposé l'utilisation d'un film du type géomembrane bitumineuse armée, réalisée à partir d'un non tissé, par exemple polyester/polypropylène ou polyester/polyéthylène ou l'un des deux, d'une émulsion de bitume et de résine polyuréthane, d'autres composés pouvant éventuellement être associés. Ce type de géomembrane présente de bonnes propriétés du point de vue de l'étanchéité et de la résistance mécanique et chimique, ainsi que de la résistance aux hydrocarbures, au cours du temps. Elle est aussi économique à réaliser et à mettre en oeuvre. Lors de l'utilisation d'une telle géomembrane pour étanchéification, généralement, plusieurs bandes de géomembranes d'une largeur unitaire pouvant atteindre quatre mètres, sont disposées parallèlement les unes aux autres et légèrement chevauchantes. L'étanchéification et la continuité mécanique au niveau de la zone de recouvrement peut être assurée par soudure thermique. Cependant, une telle soudure présente un certain nombre de faiblesses car le polyuréthane ne participe pas à la réalisation du joint car c'est un élément non thermoplastique. Le joint est donc essentiellement constitué par le bitume. Afin d'assurer une résistance acceptable et une étanchéité suffisante du joint, il est donc nécessaire d'opérer un recouvrement relativement important des géomembranes, ce qui nécessite l'utilisation d'une plus grande quantité de géomembranes pour traiter une même surface.

La présente invention se propose donc de remédier à ces inconvénients en proposant une composition collante pour géomembrane de bitume/polyuréthane armée.

Selon l'invention, la composition collante comporte un ou plusieurs composés du type polyuréthane et un ou plusieurs agents durcisseurs correspondants.

Dans diverses formes de mise en oeuvre de l'invention, les moyens suivants pouvant être combinés selon toutes les possibilités techniquement possibles, sont utilisés:
- les composés du type polyuréthane sont choisis parmi les polyuréthanes disponibles dans le commerce.
- la composition comporte un filler.
- la composition comporte un agent réticulant ou allongeur de chaîne.
- la composition comporte un silane.
- la composition comporte un débullant.
- la composition comporte du bitume.
- la composition est solvantée et comporte un ou plusieurs solvants choisis parmi tout solvant organique apolaire miscible à la composition collante et permettant d'assurer un mouillage de la surface à coller, tel le xylène.
- la teneur en solvant dans la composition est comprise entre 0 et 10% en volume et préférentiellement comprise entre 3 et 6% en volume.
- la composition est utilisée pour la réalisation d'un joint entre deux surfaces d'une ou plusieurs géomembranes bitume/polyuréthane armées.
- la composition est utilisée pour la réalisation d'un joint entre une surface d'une géomembrane bitume/polyuréthane armée et une surface d'un matériau solide.
- la composition se présente sous forme d'un kit comportant deux éléments, le premier élément comportant au moins un ou plusieurs composés du type polyuréthane et le second élément comportant au moins un ou plusieurs agents durcisseurs correspondants, les cieux éléments étant destinés à être mélangés.

La présente invention concerne aussi un procédé de mise en oeuvre d'une composition collante pour géomembrane de bitume/polyuréthane armée.

Selon l'invention de procédé de mise en oeuvre, au moins une surface d'une première géomembrane est recouverte, par étalement, d'une couche sensiblement mince et régulière d'une composition collante selon l'une quelconque des caractéristiques et moyens précédents éventuellement combinés.

Dans diverses formes de mise en oeuvre de l'invention de procédé de mise en oeuvre, les moyens suivants pouvant être combinés selon toutes les possibilités techniquement possibles, sont utilisés:
- une seconde surface de la première géomembrane est recouverte, par étalement, d'une couche sensiblement mince et régulière de la composition collante.
- une seconde surface d'une seconde géomembrane est recouverte par étalement, d'une couche sensiblement mince et régulière de la composition collante.
- une seconde surface d'un matériau solide est recouverte, par étalement, d'une couche sensiblement mince et régulière de la composition collante.
- les deux surfaces dont au moins une est recouverte, par étalement, d'une couche sensiblement mince et régulière d'une composition collante, sont appliquées l'une contre l'autre. Une seule des deux surfaces appliquées l'une contre l'autre peut être recouverte de la substance collante étalée ou les deux.
- la substance collante est mise en oeuvre à raison d'un kilo pour environ 20 m² de surface de joint dans le cas ou la substance collante est étalée sur une seule des deux surfaces appliquées l'une contre l'autre.

Enfin, l'invention concerne aussi un procédé de réalisation d'une composition collante pour géomembrane bitume/polyuréthane armée.

Selon l'invention de procédé de réalisation, on mélange un premier élément comportant au moins un ou plusieurs composés du type polyuréthane à un second élément comportant au moins un ou plusieurs durcisseurs correspondants.

La présente invention sera mieux comprise à la lecture d'essais et d'exemples de mise en oeuvre.

Afin de vérifier les propriétés de la substance collante pour géomembrane bitume/polyuréthane armée, deux géomembranes sont réalisées à partir d'un géotextile mixte polyester/polypropylène, d'un liant constitué de bitume et de résine polyuréthane (résine poly BD 45HT: polybutadiène liquide fonctionnel à terminaisons hydroxylées de la société ELF ATOCHEM), d'un agent réticulant (isocyanate en quantité stoechiométrique). Une première géomembrane désignée A est réalisée avec un rapport résine/bitume égal à 30/70 et une seconde géomembrane désignée B avec un rapport résine/bitume égal à 20/80. Quatre compositions collantes ont aussi été réalisées: colle 1 de nature époxy à partir d'ARALDITE® 2012 de la société SODIEMA, colle 2 de nature silicone à partir de mastic Rhodorsil 6B: élastomère silicone monocomposant, réticulé à température ambiante en présence d'humidité de la société RHONE POULENC, colle 3 de nature polyuréthane à partir de mastic TECTANE 1030: mastic monocomposant haut module à base de polyuréthane de la société CHRYSO, et colle 4 de nature polyuréthane identique à la géomembrane à partir de poly BD/MDI de la société ATOCHEM. Lors des tests, le collage a été réalisé à température ambiante et la quantité de colle déposée a été approximativement de 50 grammes par mètre carré. Les tests ont montré que la tenue aux bases et acide est bonne quelle que soit la colle utilisée. Par contre, la résistance mécanique du joint après immersion pendant 10 jours dans le pétrole présente de fortes variations en fonction de la colle utilisée ainsi que le montre le tableau suivant.

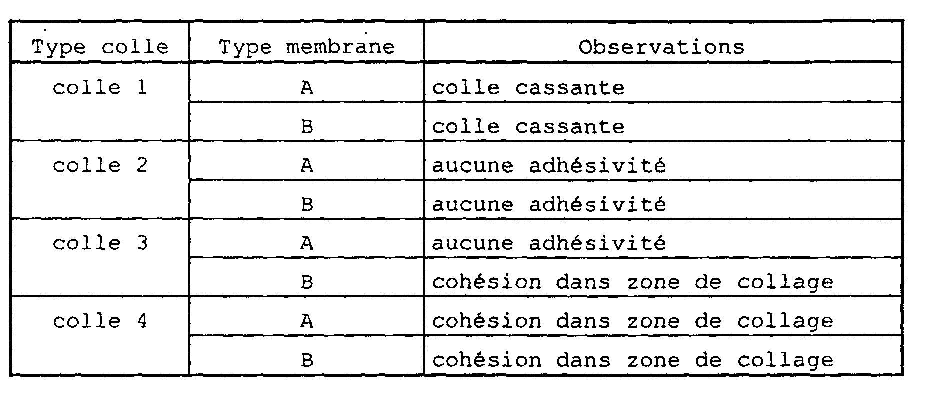

Il apparaît donc que les joints réalisés à partir de colle de nature polyuréthane et plus particulièrement de même nature polyuréthane que celle de la géomembrane, présentent les meilleures caractéristiques mécaniques. A la suite de ces essais, un test de résistance à la traction ou cisaillement du joint a été réalisé afin de mesurer quantitativement la cohésion du joint pour les couples géomembrane A/colle 4 et géomembrane B/colle 4. Pour l'analyse des résultats des essais, un résultat est jugé satisfaisant quand il y a soit rupture de la géomembrane hors du joint soit rupture cohésive du joint, c'est-à-dire sans décollement.

Lors d'un premier essai où le séchage a été obtenu à l'air, les résultats suivants ont été obtenus:

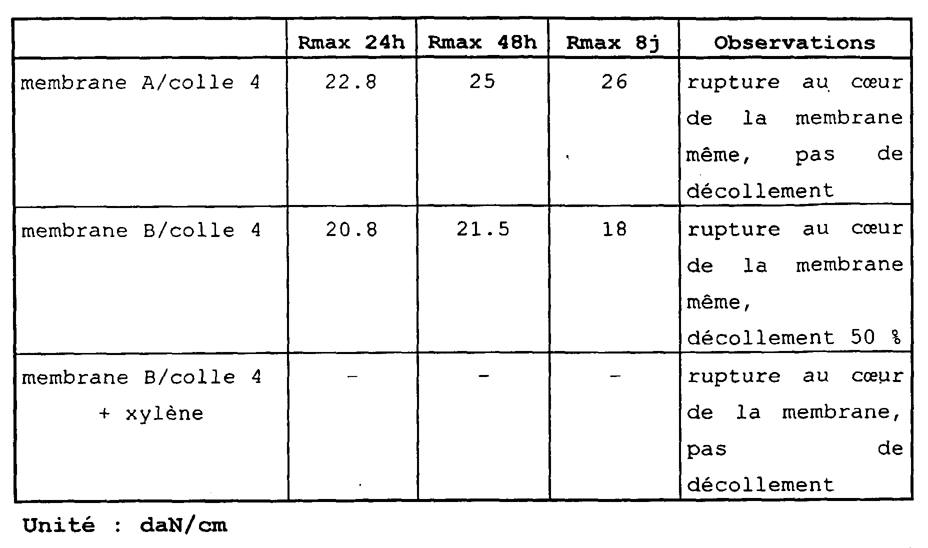

En conclusion; les valeurs de résistance maximale du joint sont comparables à celles mesurées sur une géomembrane seule (20 à 25 daN/cm). Les performances du collage apparaissent meilleures pour la géomembrane A dont le liant contient plus de résine. Dans le cas de la géomembrane B, il apparaît qu'il convient de solvanter la colle 4 avec un peu de xylène.

Lors d'un second essai où le séchage a été obtenu à l'air à la suite de quatre jours d'immersion dans le pétrole, les résultats suivants ont été obtenus:

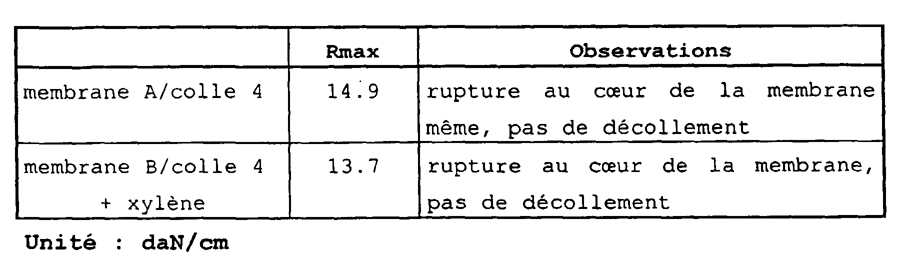

En conclusion, le complexe géomembrane/colle de l'invention permet donc d'avoir un joint résistant aux attaques chimiques et assurant une rupture cohésive de la géomembrane et donc une excellente continuité mécanique. La cohésion est d'autant meilleure que le taux de résine dans le liant d'imprégnation de la géomembrane est plus important.

Dans un autre exemple de mise en oeuvre, la composition collante a été réalisée à partir de polyuréthane et d'isocyanate, d'un filler minéral, de silane (promoteur d'adhésion) et d'un agent réticulant allongeur de chaîne. Il a été montré que l'ajout d'un débullant n'est pas systématiquement nécessaire. La colle est appliquée et étalée sur une géomembrane bitume/polyuréthane armée à raison de 0,5 gramme pour 400 cm², à la spatule. Cependant, afin de tenir compte des pertes et des irrégularités de répartition de la colle, on prévoit qu'un kilo de colle permet de réaliser environ 20 m² de joint.

Ainsi, et contrairement à ce que l'on aurait pu s'attendre à constater à cause de la présence de bitume et de polymères relativement inertes (la résine ayant été prise par durcisseur) dans la géomembrane, le collage réalisé selon l'invention permet de fabriquer des joints résistants mécaniquement et chimiquement.

Les exemples d'application qui viennent d'être donnés sont purement illustratifs et ne sauraient limiter la portée de l'invention. En effet, bien que l'utilisation préférentielle de la substance collante soit la réalisation de joints entre surfaces de géomembranes bitume/polyuréthane armées, il est aussi envisagé le cas où le joint est réalisé entre une surface de géomembrane bitume/polyuréthane armée et un autre type de revêtement ou matériau solide. Ce revêtement ou matériau solide pouvant être un dallage, carreaux de faïence ou mosaïque de verre ou tout autre type de revêtement équivalent à base de matériaux naturels et/ou artificiels type dalamit® ou autre. L'application en étant par exemple la réalisation de piscine ou l'étanchéification des sols d'habitations situées dans des régions humides ou à nappe phréatique affleurante.

Par ailleurs, toute utilisation de la substance collante est envisagée. Ce peut être pour la réalisation de joints entre deux bandes de géomembrane bitume/polyuréthane armée au niveau de leur chevauchement ou recouvrement, de joints entre des surfaces d'une même géomembrane qui est alors repliée, par exemple pour la renforcer par doublage en épaisseur ou pour former un tube simple épaisseur ou non. Ce peut être pour étanchéifier une conduite, la géomembrane étant enroulée, éventuellement en hélice, autour de la conduite et les surfaces correspondantes étant recouvertes de substance collante afin de réaliser le joint. Dans ce dernier cas, la substance collante sera étalée sur au moins une face de la géomembrane, la géomembrane étant ensuite enroulée sur la canalisation et sur elle-même. Une telle utilisation pouvant être aussi envisagée pour l'étanchéification des câbles ou de cuves, voire de façades de bâtiments.

## Revendications

1. Composition collante pour géomembrane bitume/polyuréthane armée, caractérisée en ce qu'elle comporte un ou plusieurs composés du type polyuréthane et un ou plusieurs agents durcisseurs correspondants.

2. Composition selon la revendication 1, caractérisée en ce qu'elle comporte un filler.

3. Composition selon la revendication 1 ou 2, caractérisée en ce qu'elle comporte un agent réticulant ou allongeur de chaîne.

4. Composition selon l'une quelconque des revendications précédentes, caractérisée en ce qu'elle comporte un silane.

5. Composition selon l'une quelconque des revendications précédentes, caractérisée en ce qu'elle comporte un débullant.

6. Composition selon l'une quelconque des revendications précédentes caractérisée en ce qu'elle est solvantée et comporte un ou plusieurs solvants choisis parmi les solvants organiques apolaires miscibles à la composition collante et permettant d'assurer un mouillage de la surface à coller, tel que le xylène,la teneur desdits solvants dans la composition étant comprise entre 0 et 10% en volume et préférentiellement comprise entre 3 et 6% en volume.

7. Composition selon l'une quelconque des revendications précédentes, caractérisée en ce qu'elle est utilisée pour la réalisation d'un joint entre deux surfaces d'une ou plusieurs géomembranes bitume/polyuréthane armées.

8. Composition selon l'une quelconque des revendications précédentes, caractérisée en ce qu'elle est utilisée pour la réalisation d'un joint entre une surface d'une géomembrane bitume/polyuréthane armée et une surface d'un matériau solide.

9. Composition selon l'une quelconque des revendications précédentes, caractérisée en ce qu'elle se présente sous forme d'un kit comportant deux éléments, le premier élément comportant au moins un ou plusieurs composés du type polyuréthane et le second élément comportant au moins un ou plusieurs agents durcisseurs correspondants, les deux éléments étant destinés à être mélangés.

10. Procédé de mise en oeuvre d'une composition collante pour géomembrane de bitume/polyuréthane armée caractérisé en ce que au moins une surface d'une première géomembrane est recouverte, par étalement, d'une couche sensiblement mince et régulière d'une composition collante selon l'une quelconque des revendications précédentes.

11. Procédé de réalisation d'une composition collante pour géomembrane bitume/polyuréthane armée caractérisé en ce que l'on mélange un premier élément comportant au moins un ou plusieurs composés du type polyuréthane à un second élément comportant au moins un ou plusieurs durcisseurs correspondants.
